# EUROPEAN PATENT SPECIFICATION

(11) **EP 3 842 897 B1**
(45) Date of publication and mention of the grant of the patent: **23.08.2023**
(21) Application number: 20179708.1
(22) Date of filing: 12.06.2020
(51) Int. Cl.: G06F 1/30

(54) **LOW VOLTAGE CONTROL SYSTEM, LOW VOLTAGE PROTECTION METHOD FOR AN ELECTRONIC DEVICE AND A COMPUTER PROGRAM PRODUCT THEREOF**
NIEDERSPANNUNGSTEUERUNGSSYSTEM, NIEDERSPANNUNGSSCHUTZVERFAHREN FÜR EINE ELEKTRONISCHE VORRICHTUNG UND COMPUTERPROGRAMMPRODUKT DAFÜR
SYSTÈME DE COMMANDE BASSE TENSION, PROCÉDÉ DE PROTECTION BASSE TENSION POUR UN DISPOSITIF ÉLECTRONIQUE ET PRODUIT PROGRAMME INFORMATIQUE ASSOCIÉ

(30) Priority: 23.12.2019 TW 108147242
(43) Date of publication of application: 30.06.2021
(73) Proprietor: Gunitech Corp., Hsinchu County 307 (TW)
(72) Inventor: SHIU, Huan-Ruei, 307 Hsinchu County (TW); KAO, Hsin-Yi, 307 Hsinchu County (TW); HSU, Chung-Liang, 307 Hsinchu County (TW); LIN, Xiao-Juan, 307 Hsinchu County (TW); WANG, Ming-Yi, 307 Hsinchu County (TW)
(74) Representative: Viering, Jentschura & Partner mbB Patent- und Rechtsanwälte

(56) References cited:
- US-A- 5 283 792
- US-A1- 2016 226 260

## Description

### BACKGROUND OF THE INVENTION

### 1. Field of the Invention

The present invention relates to a low voltage control system for an electronic device, a low voltage protection method for an electronic device and a computer program product thereof; more particularly, the present invention relates to a low voltage control system for an electronic device, a low voltage protection method for an electronic device and a computer program product thereof capable of limiting a flash read/write permission by means of determining whether a current voltage of a power supply is lower than a threshold.

### 2. Description of the Related Art

When the voltage of an electronic device is insufficient to drive the software and hardware of the electronic device to operate, the insufficiency is very likely to cause instantaneous interruption of the operation of the electronic device; if the software is accessing data of the flash memory at this time, such an abnormal interruption may result in incomplete hardware signals in the electronic device and thereby cause disorder in the memory data, which could make the electronic device boot or operate abnormally. Conventionally, if the electronic device is at a low voltage, a blinking light is used to remind the user to replace or recharge the battery. However, the blinking light itself will also accelerate the consumption of the battery power; moreover, the blinking light cannot solve the root cause of the problem of failure to access flash memory data due to the current voltage insufficiency of the electronic device, which still leaves room for improvement.

Therefore, there is a need to provide a low voltage control system for an electronic device, a low voltage protection method for an electronic device and a computer program product thereof to mitigate and/or obviate the aforementioned problems.

Other low voltage control systems for an electronic device are disclosed in US 5 283 792 A and US 2016/0226260 A1.

### SUMMARY OF THE INVENTION

The invention is directed to the subject-matter of the independent claims 1 and 3. Advantageous embodiments are set out in the dependent claims 2 and 4.

According to the invention, a low voltage control system for an electronic device according to claim 1 is provided. Furthermore, according to the invention, a low voltage protection method for an electronic device according to claim 3 is provided. Moreover, according to the invention, a computer program product according to claim 5 is provided.

To achieve the abovementioned objects, the low voltage control system for an electronic device of the present invention is used in an electronic device. The electronic device comprises a power supply and a memory. The memory includes a plurality of access channels. The low voltage control system for an electronic device comprises a voltage detection module and a control module. The voltage detection module is used for detecting a current voltage of the power supply. The control module is electrically connected to the voltage detection module and is used for determining whether the current voltage is lower than a first voltage threshold. If the current voltage is lower than the first voltage threshold, the control module will cut off the plurality of access channels.

The present invention further provides a low voltage protection method for an electronic device, which is used in an electronic device. The electronic device comprises a power supply and a memory. The low voltage protection method for an electronic device comprises the following steps: detecting a current voltage of the power supply; determining whether the current voltage is lower than a first voltage threshold; and if the current voltage is lower than the first voltage threshold, a control module cutting off a plurality of access channels.

Moreover, the present invention provides a computer program product, which is loaded into an electronic device and used for executing the low voltage protection method for an electronic device of the present invention.

The present invention limits the flash read/write permission for an operation unit to access a memory by determining whether the current voltage of the power supply is lower than a first threshold or a second threshold so as to prevent data disorder caused by an unstable current voltage of the power supply. Furthermore, when the low voltage control system for an electronic device and the low voltage protection method for an electronic device of the present invention are used in a boot procedure of the electronic device, the present invention holds the electronic device in a half-started state and also limit the flash read/write permission of the operation unit to access the memory if the current voltage of the electronic device is insufficient to allow the electronic device to complete the normal boot procedure. As a result, the present invention prevents the electronic device from abnormal boot or boot failure due to data disorder caused by an unstable current voltage, thereby improving the deficiency of conventional techniques.

Other objects, advantages, and novel features of the invention will become more apparent from the following detailed description when taken in conjunction with the accompanying drawings.

### BRIEF DESCRIPTION OF THE DRAWINGS

These and other objects and advantages of the present invention will become apparent from the following description of the accompanying drawings, which disclose several embodiments of the present invention. It is to be understood that the drawings are to be used for purposes of illustration only, and not as a definition of the invention.

In the drawings, wherein similar reference numerals denote similar elements throughout the several views:
FIG. 1 illustrates a schematic drawing of a low voltage control system for an electronic device according to the present invention.
FIG. 2 illustrates a flowchart of a low voltage protection method for an electronic device according to a first example not covered by the independent claims.
FIG. 3 illustrates a flowchart of the low voltage protection method for an electronic device according to a second example not covered by the independent claims.
FIG. 4 illustrates a flowchart of the low voltage protection method for an electronic device according to an embodiment of the present invention.

### DETAILED DESCRIPTION OF THE PREFERRED EMBODIMENT

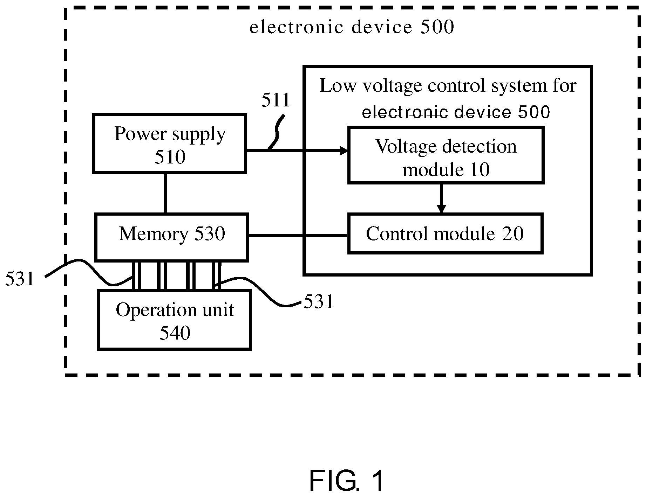

Please refer to FIG. 1, which illustrates a schematic drawing of a low voltage control system for an electronic device according to the present invention.

As shown in FIG. 1, in this embodiment, the low voltage control system for an electronic device 500 of the present invention is used in the electronic device 500. The electronic device 500 comprises a power supply 510, a memory 530 and an operation unit 540. The memory 530 includes a plurality of access channels 531 for the operation unit 540 to access data and operation commands in the memory 530. According to one embodiment of the present invention, the electronic device 500 can be a desktop computer, a laptop computer, a tablet PC, a mobile device (such as a smart phone) or a wearable device (such as a smart watch); the power supply 510 is a lithium battery; the memory 530 is a flash memory; the access channels 531 includes a serial peripheral interface (SPI), an inter-integrated circuit (I²C) and a universal asynchronous receiver/transmitter (UART); and the operation unit 540 is a central processing unit (CPU).

As shown in FIG. 1, in one embodiment of the present invention, the low voltage control system for an electronic device 500 of the present invention comprises a voltage detection module 10 and a control module 20. The control module 20 is electrically connected to the voltage detection module 10. The voltage detection module 10 is used for detecting a current voltage 511 of the power supply 510. The control module 20 is used for determining whether the current voltage 511 is lower than a first voltage threshold. If the current voltage 511 is lower than the first voltage threshold, the control module 20 will cut off the plurality of access channels 531 so as to prevent the electronic device 500 from abnormal operations due to data disorder of the operation unit 540 caused by the low supplied voltage, thereby improving the operation stability of the electronic device 500. In this embodiment, the first voltage threshold is 0.21 V. If the current voltage 511 is lower than 0.21 V, the control module 20 will determine that the electronic device 500 is in a low-supplied-voltage state; therefore, at this time the control module 20 will cut off the plurality of access channels 531. Please note that the voltage detection module 10 and the control module 20 can be disposed independently or combined together. Further, the embodiment disclosed herein is one of many preferred embodiments only. To avoid redundant descriptions, not all possible variations and combinations are disclosed in detail in this specification.

As shown in FIG. 1, in one embodiment of the present invention, the control module 20 not only determines whether the current voltage 511 is lower than the first voltage threshold but also determines whether the current voltage 511 is lower than a second voltage threshold, wherein the second voltage threshold is 2.1 V. If the current voltage 511 is lower than the second voltage threshold, the control module 20 will issue a warning signal. In this embodiment, the warning signal causes a built-in LED light of the electronic device 500 to blink in order to remind the user to replace or recharge the battery of the electronic device 500. Please note that the first voltage threshold is one-tenth of the second voltage threshold. In other words, in this embodiment, the control module 20 will first utilize the LED light to remind the user to replace or recharge the battery when the current voltage 511 of the electronic device 500 is lower than the second voltage threshold. If the low voltage state has not changed, the control module 20 will continuously monitor whether the current voltage 511 continues to decline. Once the current voltage 511 is lower than the first voltage threshold, the control module 20 will cut off the plurality of access channels 531 to prevent the electronic device 500 from abnormal operations due to data disorder.

According to another embodiment of the present invention, the low voltage control system for an electronic device 500 of the present invention is used in a boot procedure of the electronic device 500. When the electronic device 500 executes the boot procedure, if the control module 20 determines that the current voltage 511 is lower than the first voltage threshold, the control module 20 will cut off the plurality of access channels 531 and terminate the boot procedure of the electronic device 500 so as to hold the electronic device 500 in a half-started state, thereby preventing the electronic device 500 from abnormal boot or boot failure due to data disorder of the operation unit 540 caused by the unstable current voltage 511 of the electronic device 500. Please note that the half-started state means the state of only turning on the light signals or other auxiliary functions of the electronic device 500 without completing the boot procedure, which means the electronic device 500 does not fully execute the complete boot procedure.

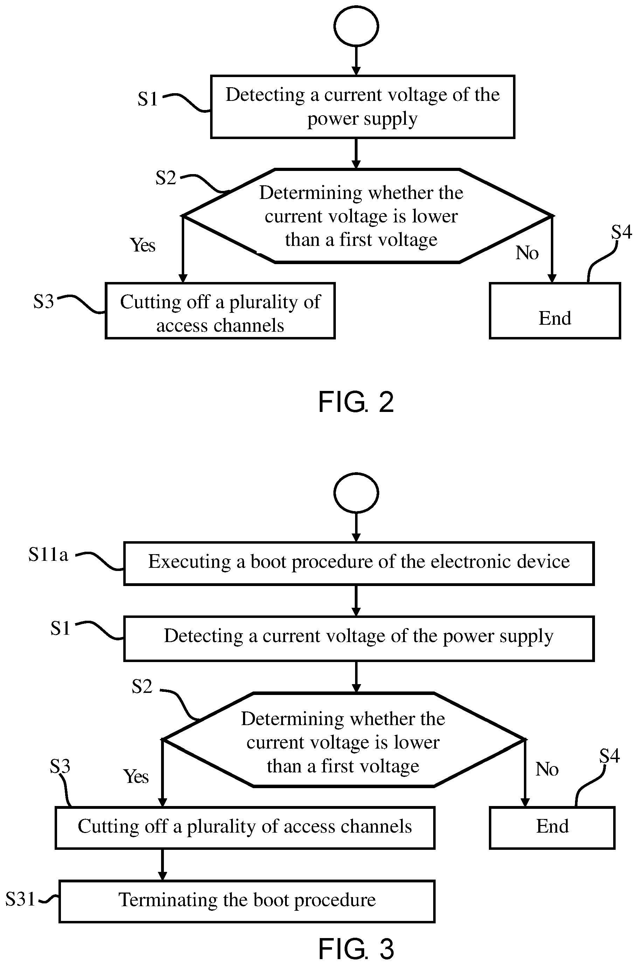

Next, please refer to both FIG. 1 and FIG. 2, wherein FIG. 2 illustrates a flowchart of a low voltage protection method for an electronic device according to a first example not covered by the independent claims. The low voltage protection method for an electronic device of the present invention is used in an electronic device 500. The electronic device 500 comprises a power supply 510, a memory 530 and an operation unit 540. The electronic device 500 can be a desktop computer, a laptop computer, a tablet PC, a mobile device (such as a smart phone) or a wearable device (such as a smart watch); the power supply 510 is a lithium battery; the memory 530 is a flash memory; the access channels 531 include a serial peripheral interface (SPI), an inter-integrated circuit (I²C) and a universal asynchronous receiver/transmitter (UART); and the operation unit 540 is a central processing unit (CPU). Further, the computer program product of the present invention can be loaded into the electronic device 500 so as to execute the steps of the first and second examples not covered by the independent claims and the embodiment of the low voltage protection method for an electronic device of the present invention. As shown in FIG. 2, the first embodiment of the low voltage protection method for an electronic device of the present invention comprises steps S1 to S4. Please also refer to FIG. 1 for better understanding the steps as shown in FIG. 2 sequentially.

Step S1: detecting a current voltage of the power supply.

The voltage detection module 10 is used for detecting the current voltage 511 of the power supply 510.

Step S2: determining whether the current voltage is lower than a first voltage threshold.

If the current voltage 511 is lower than the first voltage threshold, the control module 20 will cut off the plurality of access channels 531 (step S3). In this embodiment, the first voltage threshold 511 is 0.21 V. If the current voltage 511 is lower than 0.21 V, the control module 20 will determine that the electronic device 500 is in a low-supplied-voltage state; therefore, at this time the control module 20 will activate a low voltage protection mechanism for an electronic device in order to cut off the plurality of access channels 531, thereby preventing the electronic device 500 from abnormal operations due to data disorder of the operation unit 540 caused by the low current voltage 511, and thus improving the operation stability of the electronic device 500. In this embodiment, if the current voltage 511 is higher than the first voltage threshold, commands related to interfering with or interrupting a current operation mode of the electronic device 500 will not be executed.

Please refer to both FIG. 1 and FIG. 3, wherein FIG. 3 illustrates a flowchart of the low voltage protection method for an electronic device according to a second example not covered by the independent claims. Unlike the low voltage protection method for an electronic device according to the first example not covered by the independent claims, the second example not covered by the independent claims, as shown in FIG. 3, further comprises step S11a and step S31. Details of step S11a and step S31 will be further explained hereinafter.

Step S11a: executing a boot procedure of the electronic device.

In the second example not covered by the independent claims, the low voltage protection method for an electronic device of the present invention is used in a boot procedure of the electronic device 500. When the electronic device 500 executes the boot procedure, the control module 20 will determine whether the current voltage 511 is lower than the first voltage threshold (step S1). If the control module 20 determines that the current voltage 511 is lower than the first voltage threshold (step S2), the control module 20 will cut off the plurality of access channels 531 (step S3) and terminate the boot procedure of the electronic device 500 (step S31) so as to hold the electronic device 500 in a half-started state, thereby preventing the electronic device 500 from abnormal boot or boot failure due to data disorder of the operation unit 540 caused by the unstable voltage of the electronic device 500. Please note that the half-started state means the state of only turning on the light signals or other auxiliary functions of the electronic device 500 without completing the boot procedure, which means the electronic device 500 does not fully execute the complete boot procedure.

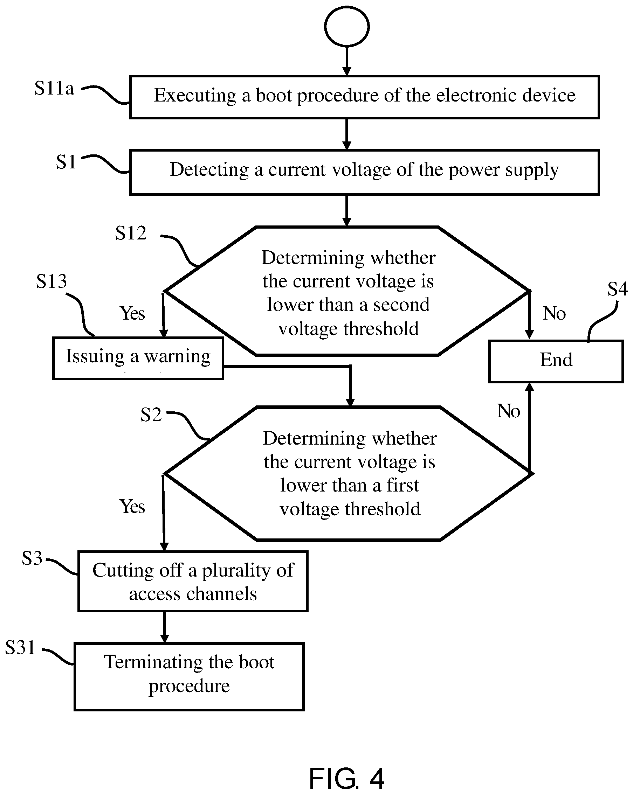

Please refer to both FIG. 1 and FIG. 4, wherein FIG. 4 illustrates a flowchart of the low voltage protection method for an electronic device according to an embodiment of the present invention. Unlike the low voltage protection method for an electronic device according to the second example not covered by the independent claims, the embodiment as shown in FIG. 4 further comprises step S12 and step S13. Details of step S12 and step S13 will be further explained hereinafter.

Step S12: determining whether the current voltage is lower than a second voltage threshold.

When the electronic device 500 executes the boot procedure, the control module 20 not only determines whether the current voltage 511 is lower than the first voltage threshold but also determines whether the current voltage 511 is lower than a second voltage threshold, wherein the second voltage threshold is 2.1 V. If the current voltage 511 is lower than the second voltage threshold, the control module 20 will issue a warning signal. In this embodiment, the warning signal causes a built-in LED light of the electronic device 500 to blink in order to remind the user to replace or recharge the battery of the electronic device 500. Please note that the first voltage threshold is one-tenth of the second voltage threshold. Therefore, when the control module 20 determines that the current voltage 511 of the electronic device 500 is lower than the second voltage threshold, the control module 20 will first utilize the LED light to remind the user to replace or recharge the battery of the electronic device 500. When the electronic device 500 executes the boot procedure, if the current voltage 511 of the electronic device 500 is still lower than the second voltage threshold, the control module 20 will continuously monitor whether the current voltage 511 continues to decline. Once the current voltage 511 is lower than the first voltage threshold, the control module 20 will cut off the plurality of access channels 531 to prevent the electronic device 500 from abnormal operations due to data disorder.

The present invention limits the flash read/write permission of the operation unit 540 to access the memory 530 by means of determining whether the current voltage 511 of the power supply 510 is lower than a first threshold or a second threshold so as to prevent data disorder caused by an unstable current voltage 511 of the power supply 510. Furthermore, when the low voltage control system for an electronic device and the low voltage protection method for an electronic device of the present invention are used in a boot procedure of the electronic device 500, the present invention holds the electronic device 500 in a half-started state and also limit the flash read/write permission of the operation unit 540 to access the memory 530 if the current voltage 511 of the electronic device 500 is insufficient to allow the electronic device 500 to complete the normal boot procedure. As a result, the present invention prevents the electronic device 500 from abnormal boot or boot failure due to data disorder caused by an unstable current voltage 511, thereby improving the deficiency of conventional techniques.

## Claims

1. A low voltage control system for an electronic device (1), configured to be used in a boot procedure of an electronic device (500), wherein the electronic device (500) comprises a power supply (510) and a memory (530), and the memory (530) includes a plurality of access channels (531), the low voltage control system for an electronic device (1) comprising:
a voltage detection module (10), configured to be used for detecting a current voltage of the power supply (510); and
a control module (20), electrically connected to the voltage detection module (10), wherein the control module (20) is configured to be used for determining whether the current voltage is lower than a first voltage threshold or a second voltage threshold, and if the current voltage is lower than the first voltage threshold, the control module (20) will be configured to cut off the plurality of access channels (53 1) and to terminate the boot procedure of the electronic device (500) so as to hold the electronic device (500) in a half-started state; if the current voltage is lower than the second voltage threshold, the control module (10) will be configured to issue a warning signal.

2. The low voltage control system for an electronic device (1) as claimed in claim 1, wherein the first voltage threshold is one-tenth of the second voltage threshold.

3. A low voltage protection method for an electronic device (500), used in a boot procedure of the electronic device (500), wherein the electronic device (500) comprises a power supply (510) and a memory (530), the memory (530) including a plurality of access channels (531), the low voltage protection method for the electronic device (500) comprising the following steps:
detecting, by a voltage detection module (10), a current voltage of the power supply (510);
a control module (20), electrically connected to the voltage detection module (10),
determining whether the current voltage is lower than a first voltage threshold or a second voltage threshold; and if the current voltage is lower than the first voltage threshold the control module (10) cutting off the plurality of access channels and terminating the boot procedure of the electronic device (500) so as to hold the electronic device (500) in a half-started state; if the current voltage is lower than the second voltage threshold, the control module (10) will issue a warning signal.

4. The low voltage protection method for an electronic device as claimed in claim 3, wherein the first voltage threshold is one-tenth of the second voltage threshold.

5. A computer program product, which is loaded into an electronic device (500) and used for executing the low voltage protection method for an electronic device (500) as claimed in claim 3.

## Patentansprüche

1. Ein Niederspannung-Steuer-System für ein elektronisches Gerät (1), welches konfiguriert ist, um bei einem Bootvorgang eines elektronischen Geräts (500) verwendet zu werden, wobei das elektronische Gerät (500) eine Stromzufuhr (510) und einen Speicher (530) aufweist, und der Speicher (530) mehrere Zugriffskanäle (531) aufweist, wobei das Niederspannung-Steuer-System für ein elektronisches Gerät (1) aufweist:
ein Spannung-Detektion-Modul (10), welches konfiguriert ist, um zum Detektieren einer aktuellen Spannung der Stromzufuhr (510) verwendet zu werden; und
ein Steuermodul (20), welches elektrisch mit dem Spannung-Detektion-Modul (10) verbunden ist, wobei das Steuermodul (20) konfiguriert ist, um zum Ermitteln verwendet zu werden, ob die aktuelle Spannung niedriger als ein erster Spannungsschwellenwert oder ein zweiter Spannungsschwellenwert ist, und wobei, falls die aktuelle Spannung niedriger als der erste Spannungsschwellenwert ist, das Steuermodul (20) konfiguriert sein wird, um die mehreren Zugriffskanäle (531) zu abzuschneiden und den Bootvorgang des elektronischen Geräts (500) abzubrechen, um das elektronische Gerät (500) in einem halbgestarteten Zustand zu halten; wobei, falls die aktuelle Spannung niedriger als der zweite Spannungsschwellenwert ist, das Steuermodul (10) konfiguriert sein wird, um ein Warnsignal auszugeben.

2. Das Niederspannung-Steuer-System für ein elektronisches Gerät (1) nach Anspruch 1, wobei der erste Spannungsschwellenwert ein Zehntel des zweiten Spannungsschwellenwerts ist.

3. Ein Niederspannung-Schutz-Verfahren für ein elektronisches Gerät (500), welches bei einem Bootvorgang des elektronischen Geräts (500) verwendet wird, wobei das elektronische Gerät (500) eine Stromzufuhr (510) und einen Speicher (530) aufweist, wobei der Speicher (530) mehrere Zugriffskanäle (531) aufweist, wobei das Niederspannung-Schutz-Verfahren für das elektronische Gerät (500) die folgenden Schritte aufweist:
Detektieren, mittels eines Spannung-Detektion-Moduls (10), einer aktuellen Spannung der Stromzufuhr (510);
ein Steuermodul (20), welches elektrisch mit dem Spannung-Detektion-Modul (10) verbunden ist,
Ermitteln, ob die aktuelle Spannung niedriger als ein erster Spannungsschwellenwert oder ein zweiter Spannungsschwellenwert ist; und falls die aktuelle Spannung niedriger als der erste Spannungsschwellenwert ist
das Steuermodul (10), welches die mehreren Zugangskanäle abschneidet und den Bootvorgang des elektronischen Geräts (500) abbricht, um das elektronische Gerät (500) in einem halbgestarteten Zustand zu halten;
wobei, falls die aktuelle Spannung niedriger als der zweite Spannungsschwellenwert ist, das Steuermodul (10) ein Warnsignal ausgeben wird.

4. Das Niederspannung-Schutz-Verfahren für ein elektronisches Gerät nach Anspruch 3, wobei der erste Spannungsschwellenwert ein Zehntel des zweiten Spannungsschwellenwertes ist.

5. Ein Computerprogrammprodukt, welches in ein elektronisches Gerät (500) geladen und zum Ausführen des Niederspannung-Schutz-Verfahrens für ein elektronisches Gerät (500) nach Anspruch 3 verwendet wird.

## Revendications

1. Système de commande basse tension pour un dispositif électronique (1), configuré pour être utilisé dans une procédure de démarrage d'un dispositif électronique (500), dans lequel le dispositif électronique (500) comprend une alimentation électrique (510) et une mémoire (530), et la mémoire (530) comprend une pluralité de canaux d'accès (531), le système de commande basse tension pour un dispositif électronique (1) comprenant :
un module de détection de tension (10), configuré pour être utilisé pour détecter une tension actuelle de l'alimentation électrique (510) ; et
un module de commande (20), connecté électriquement au module de détection de tension (10), dans lequel le module de commande (20) est configuré pour être utilisé afin de déterminer si la tension actuelle est inférieure à un premier seuil de tension ou à un deuxième seuil de tension, et si la tension actuelle est inférieure au premier seuil de tension, le module de commande (20) sera configuré pour couper la pluralité de canaux d'accès (531) et pour mettre fin à la procédure de démarrage du dispositif électronique (500) de manière à maintenir le dispositif électronique (500) dans un état de demi-démarrage ; si la tension actuelle est inférieure au deuxième seuil de tension, le module de commande (10) sera configuré pour émettre un signal d'avertissement.

2. Système de commande basse tension pour un dispositif électronique (1) selon la revendication 1, dans lequel le premier seuil de tension est un dixième du deuxième seuil de tension.

3. Procédé de protection basse tension pour un dispositif électronique (500), utilisé dans une procédure de démarrage du dispositif électronique (500), dans lequel le dispositif électronique (500) comprend une alimentation électrique (510) et une mémoire (530), la mémoire (530) comprenant une pluralité de canaux d'accès (531), le procédé de protection basse tension pour le dispositif électronique (500) comprenant les étapes suivantes :
la détection, par un module de détection de tension (10), d'une tension actuelle de l'alimentation électrique (510) ;
un module de commande (20), connecté électriquement au module de détection de tension (10), déterminant si la tension actuelle est inférieure à un premier seuil de tension ou à un deuxième seuil de tension ; et si la tension actuelle est inférieure au premier seuil de tension, le module de commande (10) coupant la pluralité de canaux d'accès et mettant fin à la procédure de démarrage du dispositif électronique (500) de manière à maintenir le dispositif électronique (500) dans un état de demi-démarrage ;
si la tension actuelle est inférieure au deuxième seuil de tension, le module de commande (10) émettra un signal d'avertissement.

4. Procédé de protection basse tension pour un dispositif électronique selon la revendication 3, dans lequel le premier seuil de tension est un dixième du deuxième seuil de tension.

5. Produit de programme informatique, chargé dans un dispositif électronique (500) et utilisé pour exécuter le procédé de protection basse tension pour un dispositif électronique (500) selon la revendication 3.
